# EUROPÄISCHE PATENTSCHRIFT

(11) **EP 2 664 458 B1**
(45) Veröffentlichungstag und Bekanntmachung des Hinweises auf die Patenterteilung: **17.07.2019**
(21) Anmeldenummer: 13002401.1
(22) Anmeldetag: 06.05.2013
(51) Int. Cl.: B41F 19/06, B41M 1/34, B44B 5/02, B44C 1/17, C09D 11/02

(54) **Bedrucken eines Werkstücks aus Glas mit einer Heißprägefolie unter Verwendung eines Prägestempels**
Printing a workpiece made of glass with a hot embossing film using an embossing stamp
Impression d'une pièce en verre à l'aide d'un film d'estampage à chaud en utilisant un poinçon

(30) Priorität: 16.05.2012 DE 102012009773
(43) Veröffentlichungstag der Anmeldung: 20.11.2013
(73) Patentinhaber: Heinz-Glas GmbH & Co. KGaA, 96355 Tettau (DE)
(72) Erfinder: Helmut, Rebhan, 96317 Kronach (DE)
(74) Vertreter: Schneider, Andreas

(56) Entgegenhaltungen:
- EP-A2- 0 164 001
- EP-A2- 0 668 170
- WO-A1-2011/121222
- DE-C1- 19 604 741
- GB-A- 867 287
- US-A- 2 558 354
- US-A1- 2007 056 451

## Beschreibung

Die Erfindung betrifft ein Verfahren zum Bedrucken eines Werkstücks aus Glas mit einer Heißprägefolie unter Verwendung eines Prägestempels. Darüber hinaus betrifft die Erfindung eine Vorrichtung zur Durchführung dieses Verfahrens.

Zur Veredelung von Glasoberflächen, wie beispielsweise von Glasbehältern, z. B. Flaschen, wie sie in der Kosmetikindustrie verwendet werden, wird die Technik des Prägefoliendrucks verwendet, die auch als Heißfolienprägung bezeichnet wird. Dabei wird mit Hilfe eines beheizbaren Prägestempels unter Temperatur und Druck eine Folie auf ein zu bedruckendes Werkstück übertragen.

Das Übertragen der Prägefolie ist typischerweise nur in einem vergleichsweise kleinen Temperaturbereich möglich. Übersteigt die Temperatur am Prägestempel bzw. an der Werkstückoberfläche eine Höchsttemperatur oder fällt dieser Wert unter eine Mindesttemperatur, dann ist eine kontrollierte Übertragung der Folie nicht mehr möglich und/oder es muß damit gerechnet werden, daß die Prägefolie während des Drucks beschädigt wird. Der richtigen Prozeßtemperatur kommt daher eine große Bedeutung zu. Bei dem Prozeß des Prägefoliendrucks, wie er bisher ausgeführt wurde, beeinflussen viele Faktoren die Prozeßtemperatur, ohne daß in geeignetem Maße hierauf Einfluß genommen werden kann. Nur beispielhaft sei auf die folgenden Einflußgrößen verwiesen:

Der Prägestempel, dessen Stempelkörper typischerweise aus einem Kunststoffmaterial besteht, wird bei den aus dem Stand der Technik bekannten Verfahren durch eine an den Stempelkörper angrenzende Heizplatte aus Metall erwärmt, welche eine Anzahl Heizelemente aufweist, wobei es sich bei diesen Heizelementen typischerweise um elektrisch Heizpatronen handelt, die in einem Keramikmantel angeordnet sind. Alternativ hierzu sind auch flüssigkeitsbeheizte Prägestempel bekannt. Ein Beispiel eines solchen herkömmlichen Heißprägeverfahrens ist in EP 0 668 170 A2 beschrieben. Aufgrund der verschiedenen zum Einsatz kommenden Materialien ist eine definierte Wärmeübertragung zu dem Stempelkörper und weiter zu der Prägefolie bzw. der Oberfläche des zu bedruckenden Werkstücks nahezu unmöglich. Zudem sind solche Heizverfahren vergleichsweise träge, was in der Praxis dazu führt, daß Temperaturschwankungen nur langsam und mit Verzögerung ausgeglichen werden können, so daß die tatsächliche Prozeßtemperatur regelmäßig außerhalb des geforderten Temperaturbereiches liegt. Folge hiervon sind beispielsweise Beschädigungen der Prägefolie oder unkontrollierte Anhaftungen der Prägefolie an dem Werkstück.

Weiterhin nimmt die Temperatur des Glaswerkstücks zum Zeitpunkt des Prägefoliendrucks Einfluß auf die Prozeßtemperatur. In diesem Zusammenhang sind besonders die Fälle von Bedeutung, in denen das mit der Heißprägefolie zu bedruckende Glaswerkstück zuvor wenigstens teilweise mit einem Druckbild aus Druckfarbe versehen wurde, auf die in einem nachfolgenden Schritt die Prägefolie aufgebracht wird.

Die Druckfarbe dient dabei beispielsweise als Primer, d. h. als eine Art Haftvermittler, der ein Aufbringen der Prägefolie auf die Glasoberfläche erst ermöglicht. Da sowohl eine noch nicht vollständig ausgehärtete Druckfarbe, als auch ein zu hoher Anteil an freien Lösemitteln in der Druckfarbe eine ordnungsgemäße Übertragung der Prägefolie auf das Werkstück erschweren oder verhindern können, ist der Trocknungsgrad der Lösemittel enthaltenden Druckfarbe wichtig. Dabei ist es bei den bekannten Verfahren von Bedeutung, daß eine nicht vollständig ausgehärtete Druckfarbe verwendet wird, weil sonst die Prägefolie nicht an der Druckfarbe haftet.

Bei thermisch härtender Druckfarbe, wie sie im Stand der Technik verwendet werden, beeinflußt die Temperatur, der das Werkstück vor der Heißfolienprägung während eines thermischen Trocknungsprozesses ausgesetzt wird, maßgeblich den Aushärtungsgrad. Ebenso hat die Temperatur, bei der das Werkstück nach dem Trocknungsprozeß bis zu der Heißfolienprägung gelagert oder transportiert wird, Einfluß auf den Zustand der Druckfarbe. Zugleich kann der Zustand der Druckfarbe von der Wandstärke des Glaswerkstücks abhängig sein, wenn ein und dasselbe Werkstück sehr unterschiedliche Wandstärken aufweist. So kann die Wandstärke einer Glasflasche beispielsweise im Schulterbereich nur 1 mm betragen, während die Wandstärke im Bodenbereich 12 mm oder mehr beträgt. Bei einer thermischen Härtung der Druckfarbe stellen sich daher auch unterschiedliche Temperaturen an der Werkstückoberfläche ein. Dadurch können unterschiedliche Vernetzungsgrade und Oberflächenspannungen entstehen.

Aufgrund der Vielzahl der möglichen Prozeßschwankungen kann selbst mit modernsten thermischen Trocknungstechnologien die Druckfarbe nur ungenügend stabil gehalten werden.

Eine Aufgabe der vorliegenden Erfindung ist es daher, eine Technik bereitzustellen, mit deren Hilfe auf vergleichsweise einfache Art und Weise die für eine qualitativ hochwertige Heißfolienprägung erforderlichen Prozeßbedingungen gewährleistet und Prozeßstabilität erreicht werden können.

Diese Aufgabe wird durch ein Verfahren nach Anspruch 1 bzw. durch eine Vorrichtung nach Anspruch 10 gelöst. Vorteilhafte Ausführungen der Erfindung sind in den Unteransprüchen angegeben. Die im Folgenden im Zusammenhang mit dem Verfahren erläuterten Vorteile und Ausgestaltungen gelten sinngemäß auch für die erfindungsgemäße Vorrichtung und umgekehrt.

Eine Idee der Erfindung ist es, wenigstens einen Teil des Prägestempels und wenigstens einen Teil des Druckbildes während und/oder unmittelbar vor dem Heißfolienprägen induktiv zu erwärmen. Das Erwärmen erfolgt dabei vorzugsweise nicht willkürlich, sondern gesteuert und/oder geregelt in Abhängigkeit von einer Anzahl Parameter, insbesondere in Abhängigkeit von der Temperatur der Werkstückoberfläche, zum Erreichen vordefinierter Prozeßgrößen.

Unter einem induktiven Erwärmen einer an dem Prägefoliendruckverfahren beteiligten Komponente wird dabei verstanden, daß die Komponente entweder selbst ein elektrisch leitfähiger Körper ist, der durch in ihm erzeugte Wirbelstromverluste geheizt wird, oder daß die Komponente einen oder mehrere elektrisch leitfähige Körper aufweist, die durch in ihnen erzeugte Wirbelstromverluste geheizt werden derart, daß das Heizen dieser Körper ein Erwärmen der Komponente zur Folge hat.

Die Wärme entsteht unmittelbar im Körper selbst, muß also nicht durch Wärmeleitung übertragen werden. Die Wärmeleistung ist gut steuerbar.

Erfindungsgemäß erfolgt das Einbringen der Wärme unmittelbar am Ort des Prägefoliendrucks, nämlich unmittelbar an der zu bedruckenden Werkstückoberfläche, genauer gesagt in der das Druckbild bereitstellenden Druckfarbe, das bedeutet unmittelbar an die Prägefolie angrenzend, und/oder an der Kontaktfläche des Prägestempels, d. h. unmittelbar an den Folienträger angrenzend, welcher die Prägefolie trägt. Darüber hinaus ist bei Verwendung einer entsprechend geeigneten Prägefolie auch die direkte induktive Erwärmung der Prägefolie selbst möglich. Durch diese unmittelbare, direkte Erwärmung des übertragungsbereichs der Prägefolie bzw. der Folie selbst werden auf vergleichsweise einfache Art und Weise die für eine qualitativ hochwertige Heißfolienprägung erforderlichen Prozeßbedingungen gewährleistet und Prozeßstabilität erreicht. Durch den Einsatz der induktiven Heiztechnik, insbesondere einer induktiven Erwärmung des Druckbildes in Kombination mit einer induktiven Erwärmung des Prägestempels, können, auch wegen der sehr gut steuerbaren Wärmeleistung, Schwankungen der Prozeßtemperatur und unterschiedliche Werkstücktemperaturen, wie sie beispielsweise durch unterschiedliche Lagerbedingungen und Lagerzeiten auftreten, gezielt und schnell ausgeglichen werden. Im Zusammenhang mit der vorliegenden Erfindung wird vorgeschlagen, zur Vorbereitung eines Werkstücks aus Glas auf das Bedrucken mit einer Heißprägefolie mit Hilfe eines Prägestempels, das Werkstück wenigstens teilweise mit einem Druckbild aus Druckfarbe zu versehen, wobei das Druckbild mit einer UV-härtenden Druckfarbe gedruckt ist, die ein thermisch entweichendes, vorzugsweise mit der Druckfarbe nicht reaktives Lösemittel enthält (nicht Teil der beanspruchten Erfindung). Durch die Verwendung einer UV-härtenden Druckfarbe wird gewährleistet, daß die Druckfarbe durch die Erwärmung von Prägestempel und/oder Druckbild nicht beeinträchtigt wird. Die Verwendung eines thermisch entweichenden, mit der Druckfarbe nicht reaktiven Lösemittels stellt die haftvermittelnde Eigenschaft der Druckfarbe sicher, auch wenn die Druckfarbe zum Zeitpunkt des Prägefoliendrucks bereits vollständig ausgehärtet ist.

Verschiedene Ausführungsbeispiele der Erfindung werden nachfolgend anhand der Zeichnungen näher erläutert. Hierbei zeigt:

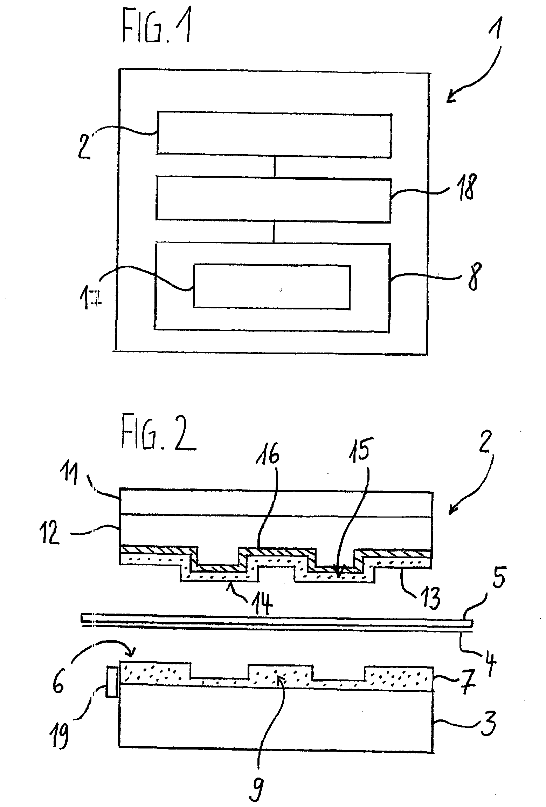

- Fig. 1: eine stark vereinfachte, schematische Darstellung einer erfindungsgemäßen Vorrichtung zum Bedrucken eines Glaswerkstücks mit einer Heißprägefolie,
- Fig. 2: eine nicht maßstabsgerechte, schematische Schnittdarstellung der Vorrichtung, bei der Prägestempel, Prägefolie und Werkstück aus Gründen der Übersichtlichkeit voneinander beanstandet abgebildet sind.

Die Figuren zeigen die Erfindung nur mit ihren wesentlichen Bestandteilen. Gleiche Bezugszeichen entsprechen dabei Elementen gleicher oder vergleichbarer Funktion.

In einem Ausführungsbeispiel der Erfindung weist die Vorrichtung 1 zur Durchführung einer Heißfolienprägung einen Prägestempel 2 zum Bedrucken eines Werkstücks 3 aus Glas mit einer Heißprägefolie 4 auf. Die Heißprägefolie 4 ist auf einem Folienträger 5 angebracht und zwischen dem Prägestempel 2 und dem Werkstück 3 angeordnet.

Um trotz des verwendeten Glasmaterials eine Art Reliefdruck zu erreichen, ist das Werkstück 3 mit einem Druckbild 6 aus Druckfarbe 7 versehen. Dabei können verschiedene Druckfarben zur Anwendung kommen. Als besonders vorteilhaft hat sich die Verwendung einer Druckfarbe erwiesen, die ein Bindemittel vom Typ ungesättigtes Acrylatharz aufweist. Für den Begriff Druckfarbe 7 wird nachfolgend auch der Begriff Primer verwendet. In einem Ausführungsbeispiel ist das Druckbild 6 dabei derart ausgeführt, daß es dem Werkstück 3 zugleich eine definierte Oberflächenstruktur in Form eines Reliefs gibt. Der Primer 7 wird hierzu typischerweise in einer Dicke aufgetragen, die eine Trockenschichtstärke von etwa 20 µm bis 40 µm ergibt. Die Dicke des aufgetragenen Primers 7 kann je nach Anwendung variieren. Ist sie zu gering, kann es zu einer partiellen Anhaftung der Heißprägefolie 4 an der Oberfläche des Werkstücks 3 kommen. Ist sie zu stark, kann es zu einem Verfließen des Primers 7 vor dem Trocknen und damit zu einem unsauberen Prägefoliendruck kommen.

Nach dem Aufbringen der Prägefolie 4 ist das resultierende Folienbild entsprechend der Form des aufgedruckten Reliefs erhaben. Diese Form des Prägefoliendrucks ist insbesondere im Kosmetikbereich wegen der hochwertigeren optischen und haptischen Erscheinungsform erwünscht. Die Erfindung ist aber auch in solchen Fällen anwendbar, wenn die Druckfarbe 7 ausschließlich als Primer dient und nicht zur Bereitstellung einer definierten Oberflächenstruktur, beispielsweise in Form eines Reliefs. Anders ausgedrückt kann die Erfindung auch dann angewendet werden, wenn der Oberfläche des Werkstücks 3 mit einer glatten Primerschicht versehen ist.

Eine Idee der Erfindung ist es, keinen thermisch härtenden, sondern einen UV-härtenden Primer 7 zu verwenden, d. h. der Primer 7 härtet unter Bestrahlung mit UV-Strahlung aus. Nach dem Druck des Primers 7 auf das Werkstück 3 im Vorfeld der Heißfolienprägung erfolgt eine UV-Trocknung, mit der eine vollständige Aushärtung des Primers 7 erreicht wird. In einem bevorzugten Ausführungsbeispiel der Erfindung wird zur Trocknung ein UV-Mitteldruckstrahler mit einer Leistung von 200 W/cm verwendet, wobei die Wellenlänge in Abhängigkeit von dem verwendeten Primer 7 zwischen 200 und 400 nm liegt. Durch die Verwendung eines UV-härtenden Primers 7 kann ein besonders exakt definierter Aushärtungsvorgang bis zur vollständigen Aushärtung erfolgen. Ist der Primer 7 vollständig ausgehärtet, so kann beim anschließenden Prägefoliendruck ein besonders sauberes und exaktes Schriftbild erreicht werden.

Aufgrund ihrer geringen Oberflächenenergie sind vollständig vernetzte UV-getrocknete Druckfarben 7 jedoch für eine anschließende Heißfolienprägung weniger geeignet. Es ist daher eine weitere Idee der Erfindung, die UV-härtende Druckfarbe 7 mit einem nicht reaktiven, thermisch trocknenden Lösemittel zu versehen. Genauer gesagt ergeben sich die haftvermittelnden Eigenschaften der verwendeten Druckfarbe 7 erst durch die Verwendung dieses Lösemittels. Der Einsatz eines nicht reaktiven, thermisch trocknenden Lösemittels in der UV-härtenden Druckfarbe 7 bedeutet einerseits, daß die Trocknungszustände von Primer 7 und Lösemittel auf unterschiedliche Art und Weise beeinflußbar sind, anders als im Stand der Technik, wo es sich stets um thermisch härtende Primer mit entsprechen thermisch entweichenden Lösemitteln handelt, die mit dem Primer chemisch reagieren. Zum anderen bedeutet das, daß das verwendete Lösemittel mit dem Primer, 7 insbesondere mit den im Primer 7 enthaltenen Bindemitteln, nicht reagiert und daher chemisch auch nicht in den Primer 7 eingebaut wird.

Eine UV-Trocknung des Primers 7 hat somit keinen Einfluß auf das enthaltene thermisch trocknende Lösemittel, so daß auch bei einer vollständigen Aushärtung des Primers 7, bei der dieser endvernetzt ist und keine offenen Bindungsmöglichkeiten mehr aufweist, der Primer 7 noch immer einen definierten Lösemittelgehalt aufweist. Dadurch ist ein Vorhandensein einer definierten Menge an Lösemittel im Primer 7 und damit an der Oberfläche des Druckbildes 6 zum Zeitpunkt der Prägefoliendrucks gewährleistet. In einer bevorzugten Ausführungsform weist der ausgehärtete Primer 7 beispielsweise einen Lösemittelgehalt von 0,5 Gew.-Prozent auf.

Das Lösemittel ist derart gewählt, daß es ein Übertragen der Prägefolie 4 von dem Folienträger 5 auf den Primer 7 unterstützt bzw. ermöglicht, beispielsweise dadurch, daß das Lösemittel ein Anlösen der Prägefolie 4 bewirkt. In einer bevorzugten Ausführungsform der Erfindung wird ein Lösemittel verwendet mit einer Verdunstungszahl, bezogen auf Diethylether, von 1100 bis 1300 bei einem Dampfdruck < 0,02 hPa bei 20°C. Die Wahl des geeigneten Lösemittels oder einer entsprechend geeigneten Lösemittelmischung ist darüber hinaus von den zeitlichen Abläufen beim Aufdrucken des Primers 7 auf das Werkstück 3, der UV-Trocknung und dem Aufbringen der Prägefolie 4, dem eigentlichen Prägefoliendruck, abhängig. So werden in einer bevorzugten Ausführungsform der Erfindung schnell entweichende und langsamer entweichende Lösemittel zu einer Lösemittelmischung gemischt, mit der zu einem bestimmten Zeitpunkt, nämlich dem Zeitpunkt des Prägefoliendrucks, ein definierter Lösemittelgehalt im Primer 7 erzielt wird.

Eine weitere Idee der Erfindung ist es, eine definierte Erwärmung des Primers 7 durch eine unten näher beschriebene Heizeinrichtung 8 der Vorrichtung 1 vorzunehmen, wobei diese Erwärmung unmittelbar vor oder während des Prägefoliendrucks erfolgt. Die Erwärmung des Primers 7 dient insbesondere dazu, eine unerwünschte Absenkung der Prozeßtemperatur zu verhindern, die bei herkömmlichen Verfahren beispielsweise durch eine unkontrollierte Wärmeabgabe an das Werkstück 3 hervorgerufen werden kann, wobei das Ausmaß der Wärmeabgabe u. a. von der Materialstärke des Werkstücks 3 im Bereich des Foliendrucks abhängig ist.

Bei dem zu erwärmenden Teil des Primers 7 handelt es sich wenigstens um den Teil, auf den die Prägefolie 4 übertragen wird. In einem Ausführungsbeispiel ist das gesamte Druckbild 6 mit dem induktiv erwärmbaren Primer 7 gedruckt. Grundsätzlich denkbar ist demnach auch eine Ausführungsform, bei der lediglich derjenige Teil des Druckbildes 5 mit einer induktiv erwärmbaren Druckfarbe 7 gedruckt wird, der als Grundlage für die Prägefolie 4 dient.

Anders als dies bei einem thermisch härtenden Primer 7 der Fall wäre, führt ein Erwärmen des Primers 7 hier nicht zu einem erneuten Reaktionsprozeß, beispielsweise einer weiteren Vernetzung. Der zum Zeitpunkt des Prägefoliendrucks gewünschte Zustand des Primers 7 wird bereits im Vorfeld des Prägefoliendrucks durch UV-Trocknung erreicht und bleibt von einer Erwärmung unbeeinflußt.

Die induktive Erwärmung des Primers 7 wird gemäß einer weiteren Idee der Erfindung dadurch bewerkstelligt, daß der Primer 7 induktiv erwärmbare Bestandteile aufweist. Es handelt sich dabei vorzugsweise um ein elektrisch leitfähiges Pulver, das für eine gleichmäßige Erwärmung gleichmäßig in der Druckfarbe 7 und damit auch im späteren Druckbild 6 enthalten ist. In einem Ausführungsbeispiel der Erfindung wird dem Primer 7 als induktiv erwärmbaren Bestandteil ein reaktionsfremdes Eisenpulver 9 beigefügt. Verwendet wird vorzugsweise Eisenpulvers 9 in Korngröße von etwa 8 µm bis etwa 17 µm, das durch Reduktion von Eisenoxid mit Wasserstoff hergestellt ist. Das zum Einsatz kommende Eisenpulver 9 besteht vorzugsweise aus mindestens 99,5 Gew. -Prozent Eisen und ist aufgrund seiner höchsten Feinheit über das gesamte Volumen des Druckbildes 6 gleichmäßig verteilt. Bezogen auf den Primer 7 werden vorzugsweise etwa 5 bis 15 Gew.-Prozent Eisenpulver 9 zugegeben. Die Verwendung anderer oder weiterer induktiv erwärmbarer Bestandteile ist möglich.

Der verwendete Prägestempel 2 weist einen Grundkörper 11 auf, in dessen Innerem bei herkömmlichen Prägestempeln Elektro-Heizpatronen angeordnet sind. Der Grundkörper 11 trägt eine Druckform 12, die typischerweise aus einem Kunststoffmaterial besteht, beispielsweise aus Silikon. An der Oberseite der Druckform 12 ist in einem Ausführungsbeispiel der Erfindung eine Abdeckung 13 aus einem elastisch verformbaren Material angebracht, die sich beim Anlegen an das Glaswerkstück 3 elastisch verformend an die mit dem Druckbild 6 versehene Werkstückoberfläche anlegt. Die Abdeckung 13 dient somit einerseits zum Ausgleich von Unebenheiten an der Werkstückoberfläche und erfüllt andererseits zugleich die Funktion eines Stempelkörpers, wobei die dem Werkstück 3 zugewandet Oberseite der Abdeckung 13 als Stempelfläche 14 des Prägestempels 2 dient.

Es ist eine weitere Idee der Erfindung, eine induktive Erwärmung des Prägestempels 2, genauer gesagt des Stempelkörpers 13, durch die weiter unten näher beschriebene Heizeinrichtung 8 vorzunehmen, wobei auch diese Erwärmung unmittelbar vor und/oder während der Heißfolienprägung erfolgt. Diese induktive Erwärmung wird in einer bevorzugten Ausführungsform der Erfindung zusätzlich zu der induktiven Erwärmung des Primers 7 vorgenommen. Es ist jedoch auch möglich, sie alternativ zu der induktiven Erwärmung des Primers 7 vorzunehmen.

Es ist eine weitere Idee der Erfindung, zum Zweck einer solchen Erwärmung die Abdeckung 13 derart auszugestalten, daß sie induktiv erwärmbare Bestandteile aufweist. In einem Ausführungsbeispiel der Erfindung besteht der Stempelkörper 13 aus einem Gummimaterial, welches mit einer ausreichenden Menge Metallteilchen, beispielsweise Metallpigmenten 15, versehen ist, die vorzugsweise gleichmäßig in dem Volumen des Stempelkörpers 13 verteilt sind. Anstelle von Gummi kann auch ein anderes geeignetes elastisch verformbares Material für den Stempelkörper 13 verwendet werden. Auch muß es sich bei den induktiv erwärmbaren Bestandteile nicht um kleine verteilte Metallteilchen handelt. Statt dessen können in dem Stempelkörper 13 auch eine Anzahl induktiv erwärmbarer Netz-, Gitter- oder Plattenstrukturen oder dergleichen angeordnet sein, sofern dabei die erforderliche Elastizität des Stempelkörpers 13 beibehalten wird.

In einem anderen Ausführungsbeispiel der Erfindung kann, wenn die Verwendung einer separaten Abdeckung nicht erforderlich ist, die Druckform 12 selbst als Stempelkörper dienen. In diesem Fall besteht die Druckform 12 vorzugsweise aus einem elastisch verformbaren Material derart, daß sie sich beim Anlegen an das mit der Heißprägefolie 4 zu bedruckende Werkstück 3 elastisch verformend an die Werkstückoberfläche anlegt, und weist entsprechende induktiv erwärmbare Bestandteile auf.

Eine weitere Idee der Erfindung ist es, in dem Prägestempel 2 einen induktiv erwärmbaren Wärmespeicher anzuordnen, der die Erwärmung des Stempelkörpers 13 durch kurzzeitige Speicherung von Wärme auch nach einem Abschalten der Heizeinrichtung 8 unterstützt und/oder eine unerwünschte Absenkung der Prozeßtemperatur verhindert, wie sie durch eine unkontrollierte Wärmeabgabe von dem Stempelkörper 13 an die restlichen Teile des Prägestempels 2, insbesondere die weiteren Teile der Druckform 12 und den Grundkörper 11 hervorgerufen werden kann. In einem Ausführungsbeispiel der Erfindung ist zu diesem Zweck benachbart zu der Abdeckung 13, vorzugsweise unmittelbar benachbart zu dieser, also genau zwischen Abdeckung 13 und Druckform 12 positioniert, ein weiterer Teil des Prägestempels 2 angeordnet, der aus einem induktiv erwärmbaren Material besteht. Dabei handelt es sich beispielsweise um eine induktiv erwärmbare, wärmespeichernde Platte, etwa in Gestalt eines Metallblechs 16. Andere Ausführungen sind möglich, beispielsweise der Einsatz von flüssigen Wärmespeichern in oder an der Druckform 12. Dieser induktiv erwärmbare wärmespeichernde Teil 16 des Prägestempels 2 oder ein weiterer, zur Unterstützung der Erwärmung des Stempelkörpers 13 dienender, induktiv erwärmbarer wärmespeichernder Teil des Prägestempels 2 kann aber auch nur mittelbar zu dem Stempelkörper 13 benachbart, beispielsweise zwischen Druckform 12 und Grundkörper 11 angeordnet sein.

Die oben genannte Heizeinrichtung 8 ist als Teil der Vorrichtung 1 ausgeführt und dient zur induktiven Erwärmung der beteiligten Komponenten. Der Aufbau und die Funktion einer induktiven Heizeinrichtung 8 sind dem Fachmann grundsätzlich bekannt, so daß an dieser Stelle nicht im Detail darauf eingegangen werden soll. Die zum Einsatz kommende Heizeinrichtung 8 weist vorzugsweise eine elektromagnetische Spule 17 auf, die auf geeignete Art und Weise relativ zu den induktiv zu erwärmenden Komponenten des Verfahrens plaziert ist derart, daß ein elektromagnetisches Wechselfeld erzeugt wird, welches in diesen Komponenten 6, 13, 16 bzw. in den elektrisch leitfähigen Bestandteilen 9, 15 dieser Komponenten Wirbelströme induziert. Von Vorteil bei der Anwendung der induktiven Heiztechnik ist es im vorliegenden Fall, daß die Erwärmung auch durch nichtleitende Materialien, beispielsweise die aus Kunststoff bestehende Druckform 12, hindurch erfolgen kann. Ein weiterer Vorteil ist der vergleichsweise hohe Wirkungsgrad gegenüber den bei herkömmlichen Heißfolienprägeverfahren angewandten Heizmethoden.

Ist diese Induktionsspule 17 als Hohlleiter ausgeführt, so kann sie zu Kühlzwecken von einem Kühlmittel, beispielsweise Wasser, durchflossen werden. Die Spule 17 ist mit einem Kondensator verbunden und wird von einer Wechselspannungs-Energiequelle gespeist. Frequenz und Energiemenge sind von der Größe und der Leitfähigkeit der zu erwärmenden Komponente 6, 13, 16 bzw. des zu erwärmenden Komponentenbestandteils 9, 15 abhängig.

Die Vorrichtung 1 umfaßt weiterhin eine an die Heizeinrichtung 8 angeschlossene Steuer- und/oder Regeleinheit 18, die zur Steuerung bzw. Regelung des Induktionsheizvorgangs dient. In einer bevorzugten Ausführungsform der Erfindung erfolgt durch die Steuer- und/oder Regeleinheit 18 eine Steuerung der Heizeinrichtung 8 auf der Grundlage zuvor ermittelter Zielgrößen und/oder es erfolgt eine Istwert/Sollwert-Regelung der Heizeinrichtung 8 in Abhängigkeit von aktuellen Meßwerten, insbesondere in Abhängigkeit von der Temperatur der Werkstückoberfläche, die zu diesem Zweck an geeigneter Stelle mit wenigstens einem mit der Steuer- und/oder Regeleinheit 18 verbundenen Temperatursensor 19 erfaßt wird.

Durch ein Aktivieren der Induktionsheizung unmittelbar vor und/oder während des Prägefoliendrucks kann die optimale Prozeßtemperatur während der gesamten Dauer des Prägefoliendrucks garantiert werden. Die Prozeßtemperatur an der Primeroberfläche kann zeitnah eingestellt und erforderlichenfalls schnell und unkompliziert nachgeregelt werden. Da die Erwärmung unmittelbar am Ort der Folienübertragung auf das Werkstück 3 erfolgt, ist eine schnelle Wärmeübertragung möglich und ungewünschte Wärmeverluste werden vermieden. Damit kann ein hohes Maß an Prozeßstabilität gewährleistet werden. Das gilt besonders, wenn eine induktive Erwärmung des Primers 7 in Verbindung mit der induktiven Erwärmung des Prägestempels 2 erfolgt.

Ist sowohl eine induktive Erwärmung des Primers 7, als auch eine induktive Erwärmung des Prägestempel 2 vorgesehen, so kann durch eine entsprechende Auswahl der induktiv erwärmbaren Materialien einerseits und/oder durch eine entsprechende Ausgestaltung der Heizeinrichtung 8 andererseits eine zeitlich und/oder örtlich selektive, gezielte Erwärmung ausgewählter, am Prozeß der Heißfolienprägung beteiligter Komponenten erfolgen. In einer Ausführungsform der Erfindung ist es beispielsweise durch ein entsprechendes Betreiben der Heizeinrichtung 8 möglich, zunächst unmittelbar vor dem Prägefoliendruck eine Erwärmung des Primers 7 und erst zu einem späteren Zeitpunkt während des Prägefoliendrucks eine Erwärmung des Stempelkörpers 2 vorzunehmen. In einer anderen Ausführungsform der Erfindung ist es durch ein entsprechendes Betreiben der Heizeinrichtung beispielsweise möglich, den Primer 7 während des Prägefoliendrucks stärker zu erwärmen, als den Stempelkörper 2, oder umgekehrt.

Im Anschluß an den Prägefoliendruck wird das im Primer 7 enthaltene Lösemittel durch thermisches Trocknen aus dem Primer 7 entfernt und der Klebstoff zwischen Primer 7 und Prägefolie 4 ausgehärtet. Es ist eine weitere Idee der Erfindung, zu diesem Zweck in einer weiteren bevorzugten Ausführungsform unterstützend zu einer herkömmlichen thermischen Trocknung oder alternativ dazu eine lokale Trocknung direkt am Ort der aufgedruckten Prägefolie 4 durch eine induktive Erwärmung der Prägefolie 4 durchzuführen. Die verwendete Prägefolie 4 weist zu diesem Zweck induktiv erwärmbare Bestandteile auf, insbesondere Metallpigmente (nicht dargestellt), oder aber besteht selbst aus einem induktiv erwärmbaren, insbesondere metallischen Material. Entsprechend ist die Heizeinrichtung 8 zum induktiven Erwärmen der Heißprägefolie 4 ausgebildet. Gegenüber einer im Anschluß an die Heißfolienprägung stattfindenden herkömmlichen thermischen Trocknung, bei der alle beteiligten Komponenten, einschließlich des Werkstücks 3 aus Glas, erwärmt werden und anschließend eine aufwendige Abkühlung des Werkstücks, beispielsweise in einem Kühltunnel, erforderlich ist, hat die induktive Erwärmung den Vorteil, daß es damit möglich ist, gezielt die Prägefolie 4 und der Primer 7 zu erwärmen, ohne daß es zu einem Aufheizen des Werkstücks 3 kommt. Dadurch entfällt die Notwendigkeit des nachträglichen Abkühlens, was den Prozeß schneller und kostengünstiger macht.

Um eine verbesserte Prozeßstabilität zu erreichen, wird mit der vorliegenden Erfindung vorgeschlagen, wenigstens einen Teil des Prägestempels 2 und/oder wenigstens einen Teil des auf der Oberfläche des Werkstücks 3 aufgebrachten Primers 7 während und/oder unmittelbar vor dem Heißfolienprägen induktiv zu erwärmen.

### Bezugszeichenliste

- 1: Vorrichtung
- 2: Prägestempel
- 3: Werkstück
- 4: Prägefolie
- 5: Folienträger
- 6: Druckbild
- 7: Druckfarbe, Primer
- 8: Heizeinrichtung
- 9: induktiv erwärmbarer Bestandteil des Primers, Eisenpulver
- 10: (frei)
- 11: Grundkörper
- 12: Druckform
- 13: Abdeckung, Stempelkörper
- 14: Stempelfläche
- 15: induktiv erwärmbarer Bestandteil des Stempelkörpers, Metallpigmente
- 16: induktiv erwärmbare, weitere Stempelkomponente, Metallplatte
- 17: Induktionsspule
- 18: Steuer- und/oder Regeleinheit
- 19: Meßsensor

## Patentansprüche

1. Verfahren zum Bedrucken eines Werkstücks (3) aus Glas mit einer Heißprägefolie (4) unter Verwendung eines Prägestempels (2), wobei das Werkstück (3) wenigstens teilweise mit einem Druckbild (6) aus Druckfarbe (7) versehen ist, **dadurch gekennzeichnet,**
- **daß** wenigstens ein Teil des Prägestempels (2) und wenigstens ein Teil des Druckbildes (6) während und/oder unmittelbar vor dem Heißfolienprägen induktiv erwärmt wird,
- **daß** die Temperatur der Oberfläche des Werkstücks (3) erfaßt wird, und
- **daß** die Prozeßtemperatur an der Oberfläche der Druckfarbe (7) nachgeregelt wird, zu welchem Zweck diese Erwärmung gesteuert und/oder in Abhängigkeit von einer Anzahl Parameter, einschließlich der Temperatur der Werkstückoberfläche, geregelt wird.

2. Verfahren nach Anspruch 1, **dadurch gekennzeichnet, daß** das Druckbild (6) dem Werkstück (3) eine definierte Oberflächenstruktur, insbesondere in Form eines Reliefs, gibt.

3. Verfahren nach Anspruch 1 oder 2, **dadurch gekennzeichnet, daß** die Druckfarbe (7) des Druckbildes (6) zum Zeitpunkt des Heißfolienprägens vollständig ausgehärtet ist und gleichzeitig einen definierten Lösemittelgehalt aufweist.

4. Verfahren nach einem der Ansprüche 1 bis 3, **dadurch gekennzeichnet, daß** das Druckbild (6) mit einer UV-härtenden Druckfarbe (7) gedruckt ist, die ein thermisch entweichendes, mit der Druckfarbe (6) nicht reaktives Lösemittel enthält.

5. Verfahren nach einem der Ansprüche 1 bis 4, **dadurch gekennzeichnet, daß** die Druckfarbe (7) induktiv erwärmbare Bestandteile (9) aufweist.

6. Verfahren nach einem der Ansprüche 1 bis 5, **dadurch gekennzeichnet, daß** während oder nach dem Bedrucken des Werkstücks (3) mit der Heißprägefolie (4) eine induktive Erwärmung der Heißprägefolie (4) erfolgt.

7. Verfahren nach einem der Ansprüche 1 bis 6, wobei zunächst unmittelbar vor dem Prägefoliendruck eine Erwärmung der Druckfarbe (7) und erst zu einem späteren Zeitpunkt während des Prägefoliendrucks eine Erwärmung des Teils des Prägestempels (2) erfolgt.

8. Verfahren nach einem der Ansprüche 1 bis 6, wobei die Druckfarbe (7) während des Prägefoliendrucks stärker erwärmt wird als der Teil des Prägestempels (2).

9. Verfahren nach einem der Ansprüche 1 bis 6, wobei der Teil des Prägestempels (2) während des Prägefoliendrucks stärker erwärmt wird als die Druckfarbe (7).

10. Vorrichtung (1) zur Durchführung des Verfahrens nach einem der Ansprüche 1 bis 9, mit einem Prägestempel (2) zum Bedrucken eines Werkstücks (3) aus Glas mit einer Heißprägefolie (4), wobei das Werkstück (3) wenigstens teilweise mit einem Druckbild (6) aus Druckfarbe (7) versehen ist, **gekennzeichnet durch**
- eine Heizeinrichtung (8) zum induktiven Erwärmen wenigstens eines Teils des Prägestempels (2) und/oder wenigstens eines Teils des Druckbildes (6),
- einen Temperatursensor (19) zum Erfassen der Temperatur der Oberfläche des Werkstücks (3),
- eine an die Heizeinrichtung (8) angeschlossene und mit dem Temperatursensor (19) verbundene Steuer- und/oder Regeleinheit (18), die zur Nachregelung der Prozeßtemperatur an der Oberfläche der Druckfarbe (7) ausgebildet ist zum Steuern der Heizeinrichtung (8) und/oder zum Regeln der Heizeinrichtung (8) in Abhängigkeit von einer Anzahl Parameter, einschließlich der Temperatur der Werkstückoberfläche.

11. Vorrichtung (1) nach Anspruch 10, **dadurch gekennzeichnet, daß** der Prägestempel (2) einen eine Stempelfläche (14) bildenden Stempelkörper (13) aufweist, welcher Stempelkörper (13) aus elastisch verformbaren Material besteht derart, daß er sich beim Anlegen an das mit der Heißprägefolie (4) zu bedruckende Werkstück (3) elastisch verformend an die Werkstückoberfläche anlegt, und wobei der Stempelkörper (13) induktiv erwärmbare Bestandteile (15) aufweist.

12. Vorrichtung (1) nach Anspruch 11, **dadurch gekennzeichnet, daß** ein benachbart zu dem Stempelkörper (13) angeordneter Teil (16) des Prägestempels (2) aus einem induktiv erwärmbaren Material besteht.

## Claims

1. Method for printing a workpiece (3) made of glass with a hot embossing film (4) by using an embossing stamp (2), the workpiece (3) being at least partly provided with a printed image (6) made of printing ink (7), **characterized**
- **in that** at least part of the embossing stamp (2) and at least part of the printed image (6) are heated inductively during and/or immediately before the hot film embossing,
- **in that** the temperature of the surface of the workpiece (3) is measured, and
- **in that** the process temperature on the surface of the printing ink (7) is readjusted, for which purpose this heating is controlled and/or regulated as a function of a number of parameters, including the temperature of the workpiece surface.

2. Method according to Claim 1, **characterized in that** the printed image (6) gives the workpiece (3) a defined surface structure, in particular in the form of a relief.

3. Method according to Claim 1 or 2, **characterized in that** the printing ink (7) of the printed image (6) is completely cured at the time of the hot film embossing and, at the same time, has a defined solvent content.

4. Method according to one of Claims 1 to 3, **characterized in that** the printed image (6) is printed with a UV-curing printing ink (7) which contains a thermally escaping solvent that does not react with the printing ink (6).

5. Method according to one of Claims 1 to 4, **characterized in that** the printing ink (7) has inductively heatable components (9).

6. Method according to one of Claims 1 to 5, **characterized in that** inductive heating of the hot embossing film (4) is carried out during or after the printing of the workpiece (3) with the hot embossing film (4).

7. Method according to one of Claims 1 to 6, wherein heating of the printing ink (7) is firstly carried out immediately before the embossing film printing, and heating of part of the embossing stamp (2) is only carried out at a later time during the embossing film printing.

8. Method according to one of Claims 1 to 6, wherein the printing ink (7) is heated more intensely during the embossing film printing than the part of the embossing stamp (2).

9. Method according to one of Claims 1 to 6, wherein the part of the embossing stamp (2) is heated more intensely during the embossing film printing than the printing ink (7).

10. Device (1) for carrying out the method according to one of Claims 1 to 9, having an embossing stamp (2) for printing a workpiece (3) made of glass with a hot embossing film (4), the workpiece (3) being at least partly provided with a printed image (6) made of printing ink (7), **characterized by**
- a heating apparatus (8) for the inductive heating of at least part of the embossing stamp (2) and/or at least part of the printed image (6),
- a temperature sensor (19) for measuring the temperature of the surface of the workpiece (3),
- a control and/or regulating unit (18) which is connected to the heating apparatus (8) and to the temperature sensor (19), which is designed to readjust the process temperature on the surface of the printing ink (7) in order to control the heating apparatus (8) and/or to regulate the heating apparatus (8) as a function of a number of parameters, including the temperature of the workpiece surface.

11. Device (1) according to Claim 10, **characterized in that** the embossing stamp (2) has a stamp body (13) forming a stamp face (14), which stamp body (13) consists of elastically deformable material in such a way that, when it is placed on the workpiece (3) to be printed with the hot embossing film (4), it is placed on the workpiece surface in an elastically deforming manner, and wherein the stamp body (13) has inductively heatable components (15).

12. Device (1) according to Claim 11, **characterized in that** a part (16) of the embossing stamp (2) that is arranged adjacent to the stamp body (13) consists of an inductively heatable material.

## Revendications

1. Procédé d'impression d'une feuille d'estampage à chaud (4) sur une pièce (3) en verre à l'aide d'une matrice d'estampage (2), la pièce (3) étant pourvue au moins partiellement d'une image imprimée (6) formée avec une encre d'impression (7), **caractérisé en ce que**
- au moins une partie de la matrice d'estampage (2) et au moins une partie de l'image imprimée (6) sont chauffées par induction pendant et/ou immédiatement avant l'estampage à chaud de la feuille,
- la température de la surface de la pièce (3) est détectée, et
- la température de traitement à la surface de l'encre d'impression (7) est réajustée, ce pour quoi ce chauffage est commandé et/ou régulé en fonction d'un certain nombre de paramètres, y compris la température de la surface de la pièce.

2. Procédé selon la revendication 1, **caractérisé en ce que** l'image imprimée (6) confère à la pièce (3) une structure de surface définie, notamment sous la forme d'un relief.

3. Procédé selon la revendication 1 ou 2, **caractérisé en ce que** l'encre d'impression (7) de l'image imprimée (6) est complètement durcie au moment de l'estampage à chaud de la feuille et présente en même temps une teneur en solvant définie.

4. Procédé selon l'une des revendications 1 à 3, **caractérisé en ce que** l'image imprimée (6) est imprimée avec une encre d'impression (7) durcissant aux UV qui contient un solvant qui ne dégoutte pas la chaleur et qui n'est pas réactif à l'encre d'impression (6).

5. Procédé selon l'une des revendications 1 à 4, **caractérisé en ce que** l'encre d'impression (7) comprend des composants (9) qui peuvent être chauffés par induction.

6. Procédé selon l'une des revendications 1 à 5, **caractérisé en ce qu'**un chauffage par induction de la feuille d'estampage à chaud (4) est effectué pendant ou après l'impression de la feuille d'estampage à chaud (4) sur la pièce (3).

7. Procédé selon l'une des revendications 1 à 6, l'encre d'impression (7) étant tout d'abord chauffé juste avant l'impression d'une feuille d'estampage et c'est seulement à un moment ultérieur pendant l'impression d'une feuille d'estampage que la partie de la matrice d'estampage (2) est chauffée.

8. Procédé selon l'une des revendications 1 à 6, l'encre d'impression (7) étant chauffée plus fortement pendant l'impression de la feuille d'estampage que la partie de la matrice d'estampage (2).

9. Procédé selon l'une des revendications 1 à 6, la partie de la matrice à estamper (2) étant chauffée plus fortement pendant l'impression de la feuille d'estampage que l'encre d'impression (7).

10. Dispositif (1) de mise en oeuvre du procédé selon l'une des revendications 1 à 9, le dispositif comprenant une matrice d'estampage (2) destinée à imprimer une feuille d'estampage à chaud (4) sur une pièce (3) en verre, la pièce (3) étant pourvue au moins partiellement d'une image imprimée (6) formée avec une encre d'impression (7), **caractérisé par**
- un moyen de chauffage (8) destiné à chauffer par induction au moins une partie de la matrice d'estampage (2) et/ou au moins une partie de l'image imprimée (6),
- un capteur de température (19) destiné à détecter la température de la surface de la pièce (3),
- une unité de commande et/ou de régulation (18) qui est raccordée au moyen de chauffage (8) et reliée au capteur de température (19) et qui est conçue pour réajuster la température de traitement sur la surface de l'encre d'impression (7) afin de commander le moyen de chauffage (8) et/ou de réguler le moyen de chauffage (8) en fonction d'un certain nombre de paramètres, y compris la température de la surface de la pièce.

11. Dispositif (1) selon la revendication 10, **caractérisé en ce que** la matrice d'estampage (2) comporte un corps de matrice (13) formant une surface de matrice (14), lequel corps de matrice (13) est en un matériau élastiquement déformable de manière à être appliqué à la surface de la pièce en se déformant élastiquement lors de l'application à la pièce (3) sur laquelle la feuille d'estampage à chaud (4) doit être imprimée, et le corps de matrice (13) comportant des composants (15) pouvant être chauffés par induction.

12. Dispositif (1) selon la revendication 11, **caractérisé en ce qu'**une partie (16), disposée de manière adjacente au corps de matrice (13), de la matrice d'estampage (2) est en un matériau pouvant être chauffé par induction.
